# EUROPÄISCHE PATENTSCHRIFT

(11) **EP 3 307 467 B1**
(45) Veröffentlichungstag und Bekanntmachung des Hinweises auf die Patenterteilung: **28.07.2021**
(21) Anmeldenummer: 16726588.3
(22) Anmeldetag: 02.06.2016
(51) Int. Cl.: B23D 61/18, B28D 1/12

(54) **SCHNEIDPERLE FÜR EIN SÄGESEIL**
CUTTING BEAD FOR A SAW WIRE
PERLE DE COUPE POUR UN CÂBLE DE SCIAGE

(30) Priorität: 12.06.2015 DE 102015109432
(43) Veröffentlichungstag der Anmeldung: 18.04.2018
(73) Patentinhaber: Universität Kassel, 34125 Kassel (DE)
(72) Erfinder: SCHWARTE, Stefan, 34414 Warburg (DE); HEISE, Christoph, 34466 Wolfhagen (DE); BÖHM, Stefan, 38179 Schwülper (DE)
(74) Vertreter: REHBERG HÜPPE + PARTNER
(86) Internationale Anmeldenummer: PCT/EP2016/062543
(87) Internationale Veröffentlichungsnummer: WO 2016/198316

(56) Entgegenhaltungen:
- EP-A1- 1 323 498
- EP-A1- 2 390 035
- EP-A2- 0 486 238
- CN-B- 102 555 073
- DE-A1- 19 752 223
- FR-A- 437 117

## Beschreibung

### TECHNISCHES GEBIET DER ERFINDUNG

Die Erfindung betrifft eine Schneidperle für ein Sägeseil gemäß dem Oberbegriff des Anspruchs 1. Eine solche Schneidperle ist aus EP 2 390 035 A bekannt. Die Erfindung betrifft auch ein mit einer solchen Schneidperle gebildetes Sägeseil und ein Verfahren zur Herstellung eines Sägeseils.

Sägeseile finden Einsatz bei Seilsägen. Solche Seilsägen werden beispielsweise zum Sägen von Stein, Beton, Stahl, Stahlbeton oder künstlichen Gesteinen (Mauerwerken) eingesetzt. Das Sägeseil wird dabei typischerweise als Endlos-Seil betrieben, wobei das Endlos-Seil mit einer Schnittgeschwindigkeit so angetrieben wird, dass es unter Spannung gehalten und entlang oder durch einen Sägekanal eines Werkstücks gezogen wird.

Sägeseile haben Längen im Bereich von einigen Metern bis zu mehr als hundert Metern. Ein Sägeseil enthält ein Trägerseil, auf dem üblicherweise in regelmäßigen Abständen Schneidperlen angebracht sind. Die Schneidperlen, nicht aber das Trägerseil, greifen an dem Werkstück an und haben eine sägende Wirkung.

### STAND DER TECHNIK

DE 2 014 437 A offenbart ein Sägeseil für eine Seilsäge, bei dem einzelne Körper mit eingesintertem Diamantkorn auf einem Drahtseil befestigt werden. Die Körper haben jeweils eine Mantelfläche etwa in der Form eines halben Konus und sind jeweils auf einen von zwei Strängen eines Drahtseils aufgebracht. Die beiden Stränge sind dabei miteinander verwunden und die Körper in einer Umfangsrichtung versetzt angeordnet.

Eine konventionelle Form für Schneidelemente eines Sägeseils ist die eines Hohlzylinders, der auf ein Drahtseil aufgefädelt ist. Die Schneidperlen weisen, wie beispielsweise in FR 2 328 553 A und WO 2014/013450 A1 offenbart, im Bereich einer Mantelfläche Diamantstaub oder Diamantsplitter auf, womit eine sogenannte "geometrisch unbestimmte Schneide" an der Schneidperle ausgebildet wird.

EP 0 486 238 A2 offenbart eine Schleifperle für ein Sägeseil. Die Schleifperle wird geformt, indem eine Mischung aus einem Schleifpulver und Metallpulver und flüssigem Metall in Form gebracht wird. Die Schleifperle weist durchgängig eingebettete Schleifpartikel und damit eine geometrisch unbestimmte Schneide auf. Verschiedene Formen für die Schleifperle sind offenbart, wobei sich mehrere der Formen entgegen einer bestimmungsgemäßen Bewegungsrichtung der Schleifperle kegelstumpfförmig oder in Form mehrerer hintereinander angeordneter Kegelstümpfe verjüngen.

WO 02/04160 A1 offenbart ein Sägeseil für eine Seilsäge mit einem Seil und mehreren Schneidperlen. Die Schneidperlen weisen einen Schneideabschnitt mit Diamanten und einen Stütz-/Schneideabschnitt auf. Dabei ist der Stütz-/Schneideabschnitt aus demselben Material wie ein Stützabschnitt der Schneidperle, insbesondere Stahl. Der Stütz-/Schneideabschnitt kann aber auch aus einem härteren Material, insbesondere gesintertem Wolframcarbid oder gesintertem Keramikmaterial, hergestellt sein. Der Schneideabschnitt mit Diamanten und der Stütz-/Schneideabschnitt wirken beim Schneiden eines Steinmaterials zusammen. Der Durchmesser des Schneideabschnitts ist dabei gleich dem Durchmesser des Stütz-/Schneideabschnitts oder größer als dieser. Gemäß den Figuren von WO 02/04160 A1 weist der Schneideabschnitt eine im Wesentlichen zylindrische Form auf.

Ein ähnlicher, mit der Oberfläche eines Schneideabschnitts abschließender Stützabschnitt ist in US 3,847,569 B offenbart. Der Stützabschnitt ist im Bereich der dem zu schneidenden Material entgegentretenden Oberfläche zylindrisch. Der Stützabschnitt ist ein Abschnitt eines Hauptkörpers aus Metall der Schneidperle, auf den der Schneidabschnitt aufgebracht ist.

DE 10 2010 021 959 A1 offenbart ein Sägeseil mit Schneidperlen, insbesondere zum Sägen von weichen Werkstücken aus Isolierstoff, Weichfaserstoff oder Styropor. Die einzelnen Schneidperlen weisen dabei eine sogenannte "geometrisch bestimmte Schneide" auf, wobei die gesamten Schneidperlen einschließlich der geometrisch bestimmten Schneide aus Stahl gefertigt sind und eine gehärtete Oberfläche aufweisen. Die geometrisch bestimmte Schneide verjüngt sich entgegen der bestimmungsgemäßen Bewegungsrichtung des Sägeseils mit einem Keilwinkel, der beispielhaft 20° betragen kann.

US 2,696,228 A offenbart eine Schneidperle für ein Sägeseil zum Schneiden von Holz, wobei die Schneidperle aus Stahl oder einer Speziallegierung hergestellt ist. Die Schneidperle weist eine geometrisch bestimmte Schneide auf und verjüngt sich entgegen einer bestimmungsgemäßen Bewegungsrichtung der Schneidperle, wobei ein Freiwinkel von 5-10° bevorzugt ist.

FR 437 117 A offenbart eine Schneidperle für eine Seilsäge. Für die Gestaltung der Schneidperle ist lediglich offenbart, dass sie ein Rohr aufweist, das zwischen an ihrer Kante in Form geschliffenen oder zugespitzten Ringen angeordnet und an diesen befestigt ist.

CN 102 555 073 B offenbart eine Schleifperle für ein Sägeseil. Die Schleifperle hat die Form zweier hintereinander angeordneter Kegelstümpfe mit gleicher Ausrichtung. Die Oberfläche der Schleifperle auf der Mantelfläche der Kegelstümpfe ist mit einer regelmäßigen Struktur aus Diamanten besetzt.

DE 43 06 273 A1 offenbart einen Sägedraht, der durch Längsstauchungen Verdickungen aufweist, welche Schneidkanten ausbilden, die gehärtet, vergütet oder geschliffen sein können.

Schneidperlen für Sägeseile mit geometrisch unbestimmten Schneiden sind aus EP 0 317 965 B1, AT 003 424 U1, DE 40 38 480 A1, DE 197 52 223 A1 und EP 1 323 498 A1 bekannt.

### AUFGABE DER ERFINDUNG

Der Erfindung liegt die Aufgabe zugrunde, eine Schneidperle bereitzustellen, die unter möglichst geringer Abnutzung an der Schneidperle selbst und/oder Erreichen einer möglichst hohen Zeitspanfläche besonders vorteilhaft in einem Sägeseil und einer Seilsäge eingesetzt werden kann. Weiterhin soll ein Sägeseil mit einer solchen Schneidperle bereitgestellt werden, sowie ein Verfahren, mit dem ein Sägeseil hergestellt werden kann.

### LÖSUNG

Die Aufgabe der Erfindung wird erfindungsgemäß mit den Merkmalen der unabhängigen Patentansprüche 1 und 14 gelöst. Weitere bevorzugte erfindungsgemäße Ausgestaltungen sind den abhängigen Patentansprüchen zu entnehmen.

### BESCHREIBUNG DER ERFINDUNG

Die Erfindung betrifft eine Schneidperle für ein Sägeseil gemäß Anspruch 1. Die Schneidperle weist eine geometrisch bestimmte Schneide auf. Darüber hinaus weist die Schneidperle auch eine geometrisch unbestimmte Schneide auf. Die Schneidperle kann eine zweite geometrisch bestimmte Schneide aufweisen.

Eine geometrisch unbestimmte Schneide ist eine Schneide, bei der eine Anzahl von Teil-Schneiden, eine Form einer Schneidkante und eine Lage zu einem Werkstück nur über statistische Kenngrößen beschreibbar sind. Typische geometrisch unbestimmte Schneiden werden beispielsweise durch ein Aufbringen von Diamantstaub auf ein Trägermaterial gebildet. Dabei besteht der Diamantstaub aus Diamantstaub-Körnern, von denen jedes zu einem Bruchteil in das Trägermaterial eindringt. Der aus dem Trägermaterial hinausragende Teil jedes Diamantstaub-Korns ist Teil der schneidaktiven Oberfläche. Die Gesamtheit der Diamantstaub-Körner bildet die schneidaktive Oberfläche, die in ihrer Geometrie nicht vorherbestimmt wurde, sondern sich zufällig gebildet hat. Eine geometrisch bestimmte Schneide hingegen ist eine Schneide, bei der die Anzahl von Teil-Schneiden, die Form der Schneidkante und die Lage zu dem Werkstück bekannt und beschreibbar sind. Ein Beispiel hierfür ist die Schneide eines Messers.

Unter einer geometrisch bestimmten Schneide soll hier auch nur eine solche Schneide verstanden werden, bei der ein Keilwinkel weniger als 90°, insbesondere weniger als 88°, 85° oder 80°, beträgt. Der Keilwinkel ist der Winkel, der an einer Schneidkante einer Schneide gebildet wird. Der Keilwinkel wird hierbei gebildet zwischen einer Freifläche und einer Spanfläche, wobei eine in die bestimmungsgemäße Bewegungsrichtung der Schneide beim Sägen weisende Stirnfläche die Spanfläche bildet und eine mit einem Freiwinkel gegenüber dem Sägekanal geneigte Fläche, im Falle der Schneidperle eine Mantelfläche der Schneidperle, die Freifläche bildet.

Erfindungsgemäß verjüngt sich die oder die erste geometrisch bestimmte Schneide entgegen einer bestimmungsgemäßen Bewegungsrichtung der Schneidperle. Die bestimmungsgemäße Bewegungsrichtung der Schneidperle ist die Bewegungsrichtung, der die Schneidperle folgt, wenn sie Teil eines Sägeseils ist und dieses Sägeseil zum Sägen benutzt wird. Die bestimmungsgemäße Bewegungsrichtung der Schneidperle steht daher in einem Winkel zu einer Vorschubrichtung des Sägeseils durch das Werkstück, d. h. der Richtung, in der ein erzeugter Sägekanal in dem Werkstück erzeugt wird. Typischerweise beträgt dieser Winkel etwa 90°.

Eine erfindungsgemäße Schneidperle kann beispielsweise zumindest abschnittsweise die Form eines Kegelstumpfes aufweisen, wobei in diesem Fall die Grundfläche des Kegelstumpfes in die bestimmungsgemäße Bewegungsrichtung der Schneidperle vorne, die Deckfläche des Kegelstumpfes in die bestimmungsgemäße Bewegungsrichtung der Schneidperle hinten angeordnet ist. Auch den im Folgenden beschriebenen komplexeren Ausführungsformen der erfindungsgemäßen Schneidperle kann eine solche Kegelstumpfform zugrunde liegen. Beispielsweise kann die Schneidperle die Form eines wie beschrieben orientierten Kegelstumpfes mit einem an die Grundfläche oder die Deckfläche angesetzten Zylinder oder zweiten Kegelstumpf aufweisen. Denkbar sind aber auch andere Geometrien der Schneidperle, sofern diese eine Verjüngung aufweisen. In einem Längsschnitt kann die Schneidperle beispielsweise eine stufenförmige, Absätze oder gegeneinander geneigte Geradenabschnitte ausbildende, kurvenförmige und/oder wellenförmige sich verjüngende Kontur aufweisen. Dabei kann sich die Schneidperle kontinuierlich verjüngen. Sie kann aber auch Teilabschnitte aufweisen, die sich in ihrem Verlauf verdicken und wieder verjüngen. Als Verjüngung im Sinne der Erfindung wird insbesondere jede Kontur betrachtet, bei der ein in die bestimmungsgemäße Bewegungsrichtung der Schneidperle weiter hinten gemessener Durchmesser der Schneidperle kleiner ist als ein in die bestimmungsgemäße Bewegungsrichtung der Schneidperle weiter vorne gemessener Durchmesser. Es ist dabei unerheblich, ob weitere Durchmesser der Schneidperle größer oder kleiner sind als einer der genannten Durchmesser. Möglich ist auch, dass eine Verjüngung der Schneidperle in Umfangsrichtung nicht umlaufend ausgebildet ist, sondern sich lediglich in mindestens einem Teilbereich des Umfangs der Schneidperle erstreckt.

Die Schneidperle kann dabei einstückig gebildet sein. Vorzugsweise weist die Schneidperle aber zwei separat voneinander ausgebildete Elemente auf. Im Folgenden wird lediglich zur Vereinfachung der Beschreibung der Erfindung angenommen, dass die Schneidperle zwei Elemente aufweist, von denen das eine als ein Schneidelement bezeichnet wird und die oder die erste geometrisch bestimmte Schneide aufweist, ohne dass dadurch die Erfindung auf die separate Ausbildung der beiden Elemente beschränkt werden soll. Unter der genannten Annahme kann beispielsweise die Verjüngung sich nur über das Schneidelement erstrecken, während das andere Element (oder weitere Elemente) keine Verjüngung aufweist (aufweisen).

Eine Länge der Schneidperle kann zwischen 4 und 16 mm liegen. Weist die Schneidperle nur ein Schneidelement auf, so kann die Länge der Schneidperle zwischen 6 und 9 mm, insbesondere zwischen 7 und 8 mm liegen.

Die erfindungsgemäße Schneidperle kann gegenüber bekannten Schneidperlen in vorteilhafter Weise zum Sägen eingesetzt werden. Sind erfindungsgemäß geometrisch bestimmte Schneiden vorhanden, so wird eine höhere Kontrolle über den Sägevorgang als bei einem Sägen ausschließlich mit geometrisch unbestimmten Schneiden gewährleistet, beispielsweise da die geometrisch bestimmte Schneide während des Sägens eine exakte Führung gewährleistet und/oder ein geometrisch definierter Säge- oder Schneidkanal ausgebildet wird. In dieser Weise entsteht unter Umständen aufgrund geringerer Reibung weniger Wärme. Infolge dessen kann u. U. erfindungsgemäß die Standfläche des erfindungsgemäßen Sägeseils gegenüber der Standfläche eines Sägeseils gemäß dem Stand der Technik erhöht werden. Die Standfläche ist dabei die Fläche, die mit dem Sägeseil gesägt werden kann, bevor das Sägeseil nachbearbeitet werden muss, d. h. bevor etwa Schneidperlen ausgetauscht oder Schneiden nachgeschliffen werden müssen. Das Sägeseil gemäß Anspruch 15 spart somit gegenüber den Sägeseilen gemäß dem Stand der Technik sowohl Materialkosten, da seltener ein neues Sägeseil beschafft werden muss, als auch Kosten, die durch Stillstand der Seilsäge und durch den Austausch des Sägeseils selbst verursacht werden. Die erfindungsgemäße Schneidperle reduziert u. U. auch die beim Sägen mit einer Seilsäge auftretenden Umweltbelastungen: Geometrisch unbestimmte Schneiden erzeugen beim Sägen feine Abfallpartikel (Staub). Geometrisch bestimmte Schneiden hingegen erzeugen beim Sägen deutlich größere Abfallpartikel (Späne). Im Gegensatz zu Spänen muss Staub abgesaugt oder mit großen Wassermengen gebunden werden, weil er beispielsweise schädliche Auswirkungen hat, wenn er in die Atemwege von Menschen oder Tieren gerät. Ein hierbei auftretender hoher Verbrauch von Elektrizität und/oder Wasser entfällt somit u. U. bei der erfindungsgemäßen Schneidperle. Zudem können Arbeitsverfahren vereinfacht werden. Auch treten bei geometrisch unbestimmten Schneiden u. U. höhere Verluste eines bearbeiteten Materials als bei geometrisch bestimmten Schneiden auf. Da bei geometrisch bestimmten Schneiden der Schnittvorgang kontrollierter ausgeführt wird, kann in einigen Fällen auch eine Prozesssicherheit erhöht werden, insbesondere wenn die Schneidperle auf vorhandene Inhomogenitäten oder Einschlüsse im Werkstück trifft.

Durch die Verjüngung der Schneidperle wird ein Freiraum zwischen dem Schneidelement und dem Werkstück geschaffen. Eine Kontaktfläche zwischen dem Schneidelement und einer zu bearbeitenden Oberfläche an dem Werkstück wird hierdurch verringert. Dadurch kann auch eine Reibung zwischen dem Schneidelement und der zu bearbeitenden Oberfläche verringert werden. Durch Reibung entstehen Wärmeverluste, so dass bei höherer Reibung ein höherer Energieaufwand zur Erreichung der gleichen Schnittleistung notwendig ist. Schneidperlen mit geometrisch unbestimmten Schneiden gemäß dem Stand der Technik erzeugen eine hohe Reibung, da sie mit einer großen Oberfläche an dem Werkstück angreifen. Die erfindungsgemäße Schneidperle reduziert damit u. U. den Energieaufwand, der zum Schneiden benötigt wird. Möglich ist auch, dass in dem Freiraum beim Sägen entstehende Späne aufgenommen und/oder abgeführt werden.

Es ist möglich, dass eine erfindungsgemäße Schneidperle einen Freiwinkel von 0° aufweist. In diesem Fall ist der Freiraum, der zwischen dem Schneidelement (der Freifläche des Schneidelements) und dem Sägekanal in dem Werkstück geschaffen wird, in Bezug auf die bestimmungsgemäße Bewegungsrichtung nach hinten von der Schneidkante beabstandet. Die oder die erste geometrisch bestimmte Schneide liegt dann (den Freiwinkel von 0° ausbildend) mit einem Teilbereich hinter der Schneidkante an dem Sägekanal in dem Werkstück an, bevor sich die Schneidperle erfindungsgemäß verjüngt. Der Freiraum grenzt also nicht direkt an die Schneidkante an. In einer Ausführungsform der Erfindung weist die oder die erste geometrisch bestimmte Schneide einen Freiwinkel größer als 0° auf. Wird der Freiwinkel größer als 0° gewählt, so grenzt der Freiraum direkt an die Schneidkante an. In einer Ausführungsform der Erfindung beträgt der Freiwinkel mehr als 0°, aber weniger als 20°, beispielsweise zwischen 5° und 15° oder zwischen 9° und 11°.

In einer Ausführungsform der Erfindung weist die oder die erste geometrisch bestimmte Schneide eine Schneidkantenarchitektur auf. Als Schneidkantenarchitektur können beispielsweise Rundungen (Radien) und/oder Fasen an der Schneidkante gewählt werden, über welche ein Übergang von der Spanfläche zu der Schneidkante und/oder von der Schneidkante zu der Freifläche erfolgen kann. Unter einer Schneidkantenarchitektur wird hierbei verstanden, dass die Schneidkante nicht als Winkel durch zwei sich schneidende Flächen (die Freifläche und die Spanfläche) gebildet, sondern in einer solchen Art und Weise bearbeitet, beispielsweise abgerundet oder angefast wird, dass vorteilhafte Wirkungen erzielt werden. Beispielsweise kann durch die Schneidkantenarchitektur eine Stabilität der Schneidkante erhöht werden.

In einer Ausführungsform wird die oder die erste geometrisch bestimmte Schneide mit einem hochharten Schneidstoff gebildet. Als hochharte Schneidstoffe werden solche Schneidstoffe bezeichnet, die härter sind als Hartmetalle, Cermets (Verbundwerkstoffe aus keramischen Werkstoffen in einer metallischen Matrix) und Schneidkeramiken. Im Rahmen der Erfindung sollen als hochharte Schneidstoffen insbesondere alle Schneidstoffe verstanden werden, die eine Härte von mehr als 2600 HV 30 aufweisen. Gegenwärtig werden unter hochharten Schneidstoffen vor allem Diamant und kubisches Bornitrid (CBN) verstanden. Es ist aber durchaus möglich, dass die Gruppe der hochharten Schneidstoffe in Zukunft durch weitere hochharte Schneidstoffe erweitert wird, die ebenfalls im Rahmen der Erfindung eingesetzt werden können. Die oder die erste geometrisch bestimmte Schneide kann aber auch mit einem anderen geeigneten Schneidstoff gebildet sein. Beispielsweise kann die oder die erste geometrisch bestimmte Schneide mit Hartmetall gebildet sein.

Es ist möglich, dass eine dünne Schicht aus dem Schneidstoff auf ein Trägermaterial aufgebracht wird. Die dünne Schicht aus dem Schneidstoff kann etwa ein Drittel so dick wie eine dicke Schicht aus dem Trägermaterial sein, insbesondere kann die dünne Schicht Schneidstoff mit einer Dicke von 0,25 bis 0,75 mm und die dicke Schicht Trägermaterial mit einer Dicke von 1,25 bis 1,75 mm aufweisen. Eine Materialstärke der oder der ersten geometrisch bestimmten Schneide kann 1 bis 5 mm betragen, insbesondere 1 bis 3 mm oder 1,5 bis 2,5 mm.

In einer Ausführungsform ist die oder die erste geometrisch bestimmte Schneide mit Diamant gebildet. Besonders bevorzugt ist eine Ausbildung mit polykristallinem Diamant (PKD). Die oder die erste geometrisch bestimmte Schneide kann aber auch mit monokristallinem Diamant (MKD) gebildet sein. Der Diamant kann auf eine geeignete Unterlage, ein Trägermaterial oder einen Tragkörper aufgebracht werden. Beispielsweise kann der Diamant auf eine Hartmetallunterlage gesintert sein. Dabei kann sich eine Gesamtstärke von Hartmetallunterlage und Diamant von 1 bis 5 mm ergeben, beispielsweise 1,5 bis 2,5 mm. Dabei kann die Schichtdicke des Diamanten geringer sein als die Schichtdicke der Hartmetallunterlage, insbesondere weniger als halb so groß oder ein Drittel so groß. Beispielsweise beträgt die Schichtdicke des Diamanten 0,5 mm +/- 0,1mm und die Schichtdicke der Hartmetallunterlage 1,5 mm +/- 0,2 mm.

Schneidperlen gemäß dem Stand der Technik mit einer geometrisch unbestimmten Schneide bestehen in ihrem gesamten Volumen aus Schneidstoff. Aufgrund dessen sind Schneidperlen gemäß dem Stand der Technik verhältnismäßig teuer, da sie einen hohen Verbrauch an teuren, beispielsweise Diamant enthaltenden Schneidstoffen haben. Die geometrisch bestimmte Schneide hingegen weist für eine Ausführungsform nur eine dünne Schneidstoffschicht auf. Damit ist ein Schneidstoffverbrauch einer Schneidperle u. U. geringer als der einer Schneidperle gemäß dem Stand der Technik.

Die geometrisch unbestimmte Schneide kann der geometrisch unbestimmten Schneide aus dem Stand der Technik bekannter Schneidperlen entsprechen und in entsprechender Weise gebildet sein. Hierbei kann die Schneidperle einstückig ausgebildet sein und daher an einem Element sowohl die geometrisch bestimmte als auch die geometrisch unbestimmte Schneide ausbilden. Bevorzugt wird (zusätzlich und separat zu dem zuvor erläuterten Schneidelement) jedoch ein Schleifelement ausgebildet, das die geometrisch unbestimmte Schneide aufweist. Somit kann die Schneidperle auch zweiteilig (oder mehrteilig) ausgebildet sein.

Das Schleifelement oder ein mit der geometrisch unbestimmten Schneide versehener Teil der Schneidperle kann eine Länge von 3 bis 8 mm aufweisen, beispielsweise zwischen 5 und 6 mm. Die durch die erfindungsgemäße Schneidperle erzielte Einsparung von Schneidstoff wird auch dann erreicht, wenn die Schneidperle eine geometrisch unbestimmte Schneide aufweist, da das Schleifelement oder der mit der geometrisch unbestimmten Schneide versehene Teil der Schneidperle gegenüber dem Stand der Technik in seiner Länge reduziert werden kann.

In einer Ausführungsform wird die geometrisch unbestimmte Schneide mit Diamant gebildet. Dabei kann die geometrisch unbestimmte Schneide mit PKD oder MKD gebildet sein. Wenn ein Schneidelement und ein Schleifelement vorhanden sind, können diese mit dem gleichen Material gebildet sein. Beispielsweise kann sowohl die oder die erste geometrisch bestimmte Schneide als auch die geometrisch unbestimmte Schneide mit PKD gebildet sein. Es ist aber durchaus auch möglich, dass die oder die erste geometrisch bestimmte Schneide und die geometrisch unbestimmte Schneide mit verschiedenen Materialien gebildet sind. Beispielsweise kann das Schneidelement mit PKD, das Schleifelement hingegen mit MKD gebildet sein. Es ist auch möglich, dass beispielsweise das Schneidelement mit CBN gebildet ist, das Schleifelement hingegen mit PKD. Wenn mehrere geometrisch unbestimmte Schneiden an der Schneidperle vorhanden sind, beispielsweise mehrere Schleifelemente gebildet sind, dann können die geometrisch unbestimmten Schneiden mit unterschiedlichen Materialien gebildet sein.

In einer Ausführungsform weist die Schneidperle ein Grund- und/oder Neutralelement auf, an dem die oder die erste geometrisch bestimmte Schneide und/oder die oder eine geometrisch unbestimmte Schneide gehalten oder ausgebildet ist, das einen Abstand zwischen einer geometrisch bestimmten Schneide und einer geometrisch unbestimmten Schneide oder zwei geometrisch bestimmten Schneiden definiert und/oder das an einem Materialabtrag nicht beteiligt ist. Das Grund- und/oder Neutralelement kann also beispielsweise ein Grundelement sein, an dem die oder die erste geometrisch bestimmte Schneide gehalten ist. Dabei kann das Schneidelement an dem Grundelement gehalten sein. An dem Grundelement kann zusätzlich oder alternativ auch die oder eine geometrisch unbestimmte Schneide gehalten sein, beispielsweise indem das Schleifelement an dem Grundelement gehalten ist. An dem Grundelement selbst kann aber auch die oder eine geometrisch unbestimmte Schneide ausgebildet sein, beispielsweise indem Diamantstaub auf das Grundelement aufgesintert ist, so dass das Grundelement das Schleifelement bildet. Es kann auch ein Neutralelement gebildet sein, das an einem Materialabtrag selbst nicht beteiligt ist. Das heißt, an dem Neutralelement ist weder eine geometrisch bestimmte Schneide noch eine geometrisch unbestimmte Schneide ausgebildet. Das Neutralelement kann dann aber die oder die erste geometrisch bestimmte Schneide und/oder die geometrisch unbestimmte Schneide halten, beispielsweise indem das Schneidelement und/oder das Schleifelement auf dem Neutralelement befestigt sind/ist, das dann auch die Funktion eines Grundelements übernimmt. Das Grund- und/oder Neutralelement kann auch so zwischen verschiedenen Elementen der Schleifperle angeordnet sein, dass es einen Abstand zwischen diesen Elementen definiert. Dabei kann es sowohl als Neutralelement ausgebildet sein, d. h. selbst nicht an dem Materialabtrag beteiligt sein, als auch an dem Materialabtrag beteiligt sein, indem es die oder die erste geometrisch bestimmte Schneide und/oder die geometrisch unbestimmte Schneide ausbildet. Dabei kann es beispielsweise den Abstand zwischen zwei geometrisch bestimmten Schneiden definieren. Es kann aber auch den Abstand zwischen einer oder der geometrisch bestimmten Schneide und einer oder der geometrisch unbestimmten Schneide definieren. Es kann auch den Abstand zwischen zwei geometrisch unbestimmten Schneiden definieren. Eine Länge des Grund- und/oder Neutralelements kann etwa 3 bis 8 mm betragen, insbesondere 5 bis 6 mm.

In einer Ausführungsform ist die geometrisch bestimmte Schneide (hinsichtlich der bestimmungsgemäßen Bewegungsrichtung der Schneidperle) vor der geometrisch unbestimmten Schneide oder dem Grund- und/oder Neutralelement angeordnet. Dabei greift die geometrisch bestimmte Schneide zeitlich vor der geometrisch unbestimmten Schneide an einer zu bearbeitenden Stelle des Werkstücks an. Unter Umständen ist es vorteilhaft, wenn die geometrisch bestimmte Schneide beim Sägen zuerst mit dem Werkstück in Kontakt tritt und die hauptsächliche Belastung aufnimmt. Die geometrisch unbestimmte Schneide führt das Sägeseil und glättet eventuell vorstehende Materialbereiche, die nach dem Sägen mit der geometrisch bestimmten Schneide zurückgeblieben sind, ist aber durch die geometrisch bestimmte Schneide vor einer vollen Einwirkung des Werkstücks geschützt. Hierdurch wird auch ein Materialabtrag durch Belastung an der geometrisch unbestimmten Schneide verringert und somit ihre Lebensdauer erhöht. Somit wird die Gesamtlebensdauer der Schneidperle gegenüber dem Stand der Technik erhöht.

In einer Ausführungsform ist die geometrisch bestimmte Schneide (hinsichtlich der bestimmungsgemäßen Bewegungsrichtung der Schneidperle) hinter der geometrisch unbestimmten Schneide oder dem Grund- und/oder Neutralelement angeordnet. Dabei greift die geometrisch bestimmte Schneide an dem Werkstück nach der geometrisch unbestimmten Schneide an. Vorteil hierbei ist, dass die geometrisch bestimmte Schneide hinter die geometrisch unbestimmte Schneide zurücktritt und daher beim Sägen weniger belastet wird. Die geometrisch unbestimmte Schneide bewirkt u. U. einen Hauptteil des Sägens, insbesondere einen höheren volumetrischen Materialabtrag als die geometrisch bestimmte Schneide.

Es ist auch möglich, dass eine geometrisch bestimmte Schneide vor und eine weitere geometrisch bestimmte Schneide hinter der geometrisch unbestimmten Schneide oder dem Grund- und/oder Neutralelement angeordnet ist. Dabei können beispielsweise Konfigurationen der Art Schneidelement-Schleifelement-Schneidelement oder Schneidelement-Neutralelement-Schneidelement entstehen. Es können aber auch beliebige Mehrfachkombinationen gebildet werden, beispielsweise Schneidelement-Schleifelement-Schneidelement-Schleifelement-Schneidelement. Hierbei ist die nachgelagerte geometrisch bestimmte Schneide durch das Schleifelement oder das Grund- und/oder Neutralelement geschützt, während gleichzeitig die vorgelagerte geometrisch bestimmte Schneide den Hauptteil des Sägens übernimmt und die Belastung aufnimmt, um die Lebensdauer der geometrisch unbestimmten Schneide und damit der Schneidperle insgesamt zu erhöhen.

In einer Ausführungsform weist die Schneidperle zwei geometrisch bestimmte Schneiden auf. Dabei ist sowohl möglich, dass die Schneidperle zwei Schneidelemente aufweist, als auch, dass die beiden Schneiden an demselben Schneidelement ausgebildet sind. Wenn zwei Schneidelemente ausgebildet sind, die beispielsweise auf beiden Seiten eines Schleifelements oder eines Neutralelements angeordnet sein können, kann die Schneidperle bspw. eine Länge zwischen 11 und 12 mm aufweisen.

In einer Ausführungsform weist die Schneidperle ein Schneidelement auf, das die oder eine geometrisch bestimmte Schneide aufweist, und weist die Schneidperle ein Schleifelement auf, das die oder eine geometrisch unbestimmte Schneide aufweist. Dabei ist es durchaus möglich, dass die Schneidperle mehr als ein Schneidelement und/oder mehr als ein Schleifelement aufweist, dass die Schneidperle zusätzlich zu dem Schneidelement und dem Schleifelement eines oder mehrere Grund- und/oder Neutralelemente aufweist, oder dass die Schneidperle weitere Elemente aufweist.

In einer Ausführungsform ist ein Außendurchmesser der geometrisch bestimmten Schneide des Schneidelements geringer als ein Außendurchmesser des Schleifelements oder des Grund- und/oder Neutralelements. Der Außendurchmesser der geometrisch bestimmten Schneide des Schneidelements wird dabei an der Stelle gemessen, an der die geometrisch bestimmte Schneide des Schneidelements einen Maximal-Außendurchmesser aufweist, ist also üblicherweise auch ein Maximal-Außendurchmesser des Schneidelements und ein Außendurchmesser der Schneidkante. In gleicher Weise ist auch der Außendurchmesser des Schleifelements oder des Grund- und/oder Neutralelements ein Maximal-Außendurchmesser, wenn das Schleifelement oder das Grund- und/oder Neutralelement keinen einheitlichen Außendurchmesser aufweist.

Es ist aber durchaus möglich, dass das Schneidelement oder das Grund- und/oder Neutralelement und das Schleifelement den gleichen oder nahezu den gleichen Außendurchmesser aufweisen. In diesem Fall ist das Schleifelement besonders gut dazu geeignet, eine Bearbeitung an dem Werkstück, die durch das Schneidelement vorgenommen wurde, zu glätten. Es ist grundsätzlich auch möglich, dass der Außendurchmesser des Schneidelements größer ist als der Außendurchmesser des Schleifelements oder des Grund- und/oder Neutralelements, sodass das Schneidelement einen Hauptteil des Materialabtrags übernimmt. Diese Ausführungsform ist besonders vorteilhaft, wenn das Grundelement keine geometrisch unbestimmte Schneide aufweist oder nur ein Neutralelement zum Einsatz kommt, da in diesem Fall die geometrisch bestimmte Schneide des Schneidelements vollständig den Materialabtrag übernimmt.

In einer Ausführungsform ist der Außendurchmesser der geometrisch bestimmten Schneide des Schneidelements mehr als 0 mm und maximal 2 mm geringer als der Außendurchmesser des Schleifelements oder des Grund- und/oder Neutralelements. Ein Außendurchmesser der geometrisch bestimmten Schneide des Schneidelements kann 5 bis 15 mm betragen, beispielsweise 11 bis 12 mm. Der Außendurchmesser des Schleifelements oder des Grund- und/oder Neutralelements kann 5 bis 15 mm betragen, beispielsweise 11 bis 12 mm. Ein Unterschied der Durchmesser kann weniger als 1,0 mm oder weniger als 0,5 mm betragen, insbesondere im Bereich von 0,1 bis 0,3 mm liegen, wobei der Außendurchmesser des Schleifelements oder des Grund- und/oder Neutralelements größer ist als der Außendurchmesser der geometrisch bestimmten Schneide des Schneidelements.

In einer Ausführungsform weist das Schneidelement eine Ausnehmung auf und das Schneidelement ist mit der Ausnehmung auf einen Sockelbereich des Schleifelements oder Grund- und/oder Neutralelements gefügt. Die Ausnehmung kann dabei sowohl durchgehend als auch mit Stufen gestaltet sein.

Beispielsweise kann das Schleifelement oder das Grund- und/oder Neutralelement einen Zentralbereich aufweisen, wobei der Sockelbereich in axialer Richtung an den Zentralbereich angrenzt. Es ist auch möglich, dass das Schleifelement mehrere Sockelbereiche aufweist, die beispielsweise in axialer Richtung auf beiden Seiten an den Zentralbereich angrenzen können. In dem Sockelbereich kann dann ein Durchmesser des Schleifelements oder des Grund- und/oder Neutralelements geringer sein als in dem Zentralbereich. Das Schneidelement kann dann mit seiner Ausnehmung auf den Sockelbereich gefügt sein. Ein Vorteil einer solchen Ausbildung kann beispielsweise sein, dass das Schneidelement beim bestimmungsgemäßen Gebrauch der Schneidperle auf dem Sockelbereich in Richtung auf den Zentralbereich beansprucht wird und sich dann bei Beanspruchung an dem Zentralbereich abstützen kann. Es ist aber auch möglich, dass das Schneidelement bei Beanspruchung gerade von dem Zentralbereich weg gedrückt wird. Weiterhin ist es möglich, dass sich ein Durchmesser des Schleifelements oder Grund- und/oder Neutralelements in dem Sockelbereich nicht oder nicht wesentlich von einem Durchmesser des Schleifelements oder Grund- und/oder Neutralelements in dem Zentralbereich unterscheidet. In den allen Fällen wird das Schneidelement zusätzlich axial fixiert, wie im Folgenden noch näher erläutert wird.

Bei einer Schneidperle mit zwei Schneidelementen können zwei Sockelbereiche ausgebildet werden. Die Sockelbereiche können eine Länge von 1 bis 4 mm oder 2 bis 3 mm aufweisen, insbesondere zwischen 2,5 und 2,8 mm. Eine Länge des Zentralbereichs kann dann zwischen 1 und 15 mm oder zwischen 7 und 10 mm betragen, insbesondere zwischen 8,5 und 8,8 mm.

Das Schneidelement kann in beliebiger Weise auf den Sockelbereich gefügt sein. "Fügen" soll hier das dauerhafte Verbinden von mindestens zwei Bauteilen beschreiben, wie es in DIN 8593 definiert ist. Das Fügen umfasst also insbesondere das Zusammensetzen, das An- und Einpressen, das Schweißen, das Löten, das Kleben, das Verschrauben und das Schrumpfen. Es umfasst auch das Verbinden mittels Verbindungselementen wie Stiften, Schrauben, Nieten, Passfedern oder Keilen.

Beispielsweise kann das Schneidelement an einem Innendurchmesser ein Gewinde aufweisen, wobei der Sockelbereich ein Gegengewinde aufweist, so dass das Schleifelement auf den Sockelbereich aufgeschraubt werden kann. Ein Aufschrauben ist vorteilhaft, da in dieser Weise das Schneidelement, sollte es ausgetauscht werden müssen, leicht von der Schneidperle abgeschraubt und ausgetauscht werden kann.

In gleicher Weise kann das Schneidelement auch an das Schleifelement oder das Grund- und/oder Neutralelement gefügt werden, wenn dieses keinen Sockelbereich aufweist.

Eine weitere Lösung der der Erfindung zugrundeliegenden Aufgabe stellt ein Sägeseil dar, das eine Schneidperle gemäß Anspruch 1 aufweist. Dabei soll das Aufweisen einer Schneidperle hier, wie auch bei allen übrigen Mengenangaben, so verstanden werden, dass das Sägeseil mindestens eine Schneidperle aufweist. Das Sägeseil weist dabei beispielsweise 20 bis 80 Schneidperlen pro Meter oder 35 bis 40 Schneidperlen pro Meter auf.

In einer Ausführungsform weist das Sägeseil ein Trägerseil und zwei Schneidperlen auf. Ein Abstandselement ist auf dem Trägerseil angeordnet und definiert den Abstand der beiden Schneidperlen.

Das Trägerseil kann beispielsweise ein Stahlseil sein. Gewählt werden kann aber auch jedes beliebige andere geeignete Material, aus dem Seile ausgebildet werden können, die den beim Sägen entstehenden hohen Beanspruchungen standhalten können. Das Trägerseil kann einen Durchmesser unterhalb von 10 mm haben, beispielsweise zwischen 3 und 6 mm.

Als Abstandselement kann beispielsweise ein Kunststoffelement gewählt werden. Das Kunststoffelement kann elastisch sein, so dass es beim Sägen auftretende Verschiebungen zwischen den Sägeperlen abfedern kann. Das Abstandselement kann auch mit einer Feder ausgebildet sein, beispielsweise einer Stahlfeder. Die Stahlfeder kann ebenfalls Abstandsverschiebungen der Schneidperlen abfedern. Ein elastisches Abstandselement definiert eine Gleichgewichtslage für den Abstand benachbarter Schneidperlen. Das Abstandselement kann aber auch inelastisch sein, so dass die Abstände zwischen den Schneidperlen unveränderlich sind.

Das Sägeseil kann außerdem eine Ummantelung aufweisen, die das Abstandselement und einen Teilbereich der Schneidperle radial ummantelt. Die Ummantelung kann durchaus eine rauer Oberfläche besitzen. Ist diese hingegen glatt, verschafft die Ummantelung dem Sägeseil abseits der Schneidperlen eine glatte Oberfläche. Beim Sägen anfallende Abfallpartikel werden durch die Ummantelung abgewiesen. Die Abfallpartikel können so nicht zwischen die verschiedenen Elemente des Sägeseils gelangen, beispielsweise zwischen das Trägerseil und das Abstandselement, das Abstandselement und die Schneidperle oder sogar in die Schneidperle. Auch können sich die Abfallpartikel nicht in dem Abstandselement festsetzen, wenn dies beispielsweise als Feder ausgebildet ist. Die Ummantelung wird dabei vorzugsweise hinsichtlich Kopplungsbereichen, Länge und/oder Kontur so gestaltet, dass sie jeweils noch einen geringen Teil der Schneidperle ummantelt und an diesem abgestützt oder befestigt ist oder zwischen benachbarten Schneidperlen axial verspannt ist. In dieser Weise wird bei einem Sägeseil mit mehreren Schneidperlen die Oberfläche des Sägeseils bis auf die Schneidperlen mit mehreren Ummantelungen (mehreren Ummantelungs-Elementen) nahezu vollständig ummantelt und es ist für Abfallpartikel unmöglich oder zumindest stark erschwert, unter die Ummantelung zu dringen. Die Ummantelung dient damit als Schutz für das Sägeseil, insbesondere auch vor Verschleiß. Als einziger Teil des Sägeseils können alle geometrisch bestimmten und geometrisch unbestimmten Schneiden bzw. eine Oberfläche des Neutralelements (ggf. nur eine Oberfläche des Zentralbereichs des Neutralelements), wenn ein solches vorhanden ist, nicht von der Ummantelung ummantelt sein und über die Ummantelung radial herausragen. Vorzugsweise wird die Ummantelung elastisch ausgebildet, insbesondere aus Kunststoff. Grundsätzlich kann die Schneidperle auf jede beliebige Weise auf das Trägerseil gefügt sein. Insbesondere muss das Trägerseil hierzu kein Gewinde aufweisen. Die Schneidperle kann auf ein auf dem oder einem Trägerseil befestigtes Gewinde aufgeschraubt sein. In einer Ausführungsform ist die Schneidperle auf ein auf dem Trägerseil befestigtes Gewinde beliebiger Gewindegeometrie aufgeschraubt. Dazu weist die Schneidperle an einem Innendurchmesser ein Gewinde auf. Das Trägerseil kann dann ein Gegengewinde aufweisen, auf das die Schneidperle aufgeschraubt werden kann. Das Außengewinde kann mit einem Halteelement gebildet sein, das an dem Trägerseil beispielsweise verklebt, verlötet, verpresst oder verschweißt ist. Das Gewinde und das Gegengewinde können jeden beliebigen Durchmesser haben, der zwischen den Außendurchmessern des Trägerseils und der Schneidperle liegt und eine ausreichende Wandstärke der Schneidperle gewährleistet. Bevorzugt wird aber ein Gewinde gewählt, das entsprechend der ISO-Definition für metrische Gewinde zwischen M3 und M8 liegt. Insbesondere wird ein M6-Gewinde gewählt. In dieser Weise kann die Schneidperle von dem Sägeseil abgeschraubt werden, sollte sie ausgetauscht werden müssen. Die Schneidperle kann so auf einfache Weise durch eine andere Schneidperle ersetzt werden, ohne dass für den Austausch der Schneidperle das Sägeseil zerstört werden müsste. Wenn die Schneidperle nicht auf das Trägerseil aufgeschraubt ist, kann die Schneidperle trotzdem ein Gewinde aufweisen. Das Gewinde kann dann dazu dienen, dass ein Material der Ummantelung, beispielsweise Kunststoff, zwischen die Schneidperle und das Trägerseil und damit in das Gewinde der Schneidperle eindringt und so die Schneidperle zusätzlich auf dem Trägerseil befestigt. In gleicher Weise kann das Gewinde auch dazu dienen, einen Klebstoff aufzunehmen. Es könne aber auch andere, nicht gewindeartig ausgebildete Ausnehmungen, Rillen oder Nuten zu diesem Zweck vorhanden sein.

Ein Sägeseil kann bei einer Schnittgeschwindigkeit zwischen 300 und 400 m/min bei einer Zustellung zwischen 5 und 30 µm eingesetzt werden. Sägeseile gemäß dem Stand der Technik werden üblicherweise mit einer Schnittgeschwindigkeit von 1.000 bis 2.000 m/min bei einer Zustellung von weniger als 0,5 µm pro Perle eingesetzt. Wird unter diesen Bedingungen Bianco-Carrara-Marmor mit Wasserkühlung geschnitten, kann mit dem erfindungsgemäßen Sägeseil eine Schnittleistung (Zeitspanfläche) von 21,6 m²/h erreicht werden, während Sägeseile gemäß dem Stand der Technik lediglich 1,2 m²/h erreichen. Damit weist das Sägeseil einen deutlich höheren Vorschub auf als aus dem Stand der Technik bekannt. Die Sägeleistung ist beispielsweise gegenüber dem Stand der Technik auf das 18-fache erhöht. Bei Sägen, die mit mehreren Sägeseilen arbeiten (Multi-Seil-Schleifmaschinen), kann damit eine Erhöhung der Schnittleistung auf 1.224 m²/h erwartet werden, wenn 60 Seile eingesetzt werden.

In einem erfindungsgemäßen Verfahren wird ein Sägeseil, insbesondere ein erfindungsgemäßes Sägeseil, durch die Merkmale des Anspruchs 14 hergestellt. Grundsätzlich ist es auch möglich, die verschiedenen Elemente, mit denen die Schneidperle gebildet wird, einzeln oder zu Baugruppen gefügt auf das Trägerseil aufzubringen und dort zusammenzufügen. Möglicherweise wird aber auch die Schneidperle als Ganzes zusammengefügt und anschließend die Schneidperle als Ganzes auf das Trägerseil gefügt.

Das Schneidelement und das Schleifelement werden auf eine beliebige Weise zusammengefügt. Bevorzugt weist das Schleifelement oder das Neutralelement einen Sockelbereich auf, auf den das Schneidelement aufgeschoben und wie oben beschrieben gefügt, insbesondere geschraubt, wird.

Die Schneidperle kann mit dem Zusammenfügen des Schneidelements und des Schleifelements oder Neutralelements vollständig ausgebildet sein. Es ist aber auch möglich, dass noch weitere Elemente an das Schneidelement und das Schleifelement oder das Neutralelement angefügt werden, beispielsweise ein weiteres Schneidelement oder ein weiteres Schleifelement oder Neutralelement und ein weiteres Schneidelement. Für diese Ausführungsform werden aber alle Elemente, die die Schneidperle ausbilden, zusammengefügt, so dass die Schneidperle vollständig ist. Die Schneidperle wird erst, wenn sie vollständig ist, auf das Trägerseil gefügt.

Zur Herstellung des Sägeseils können außer den Schneidperlen auch weitere Elemente auf das Trägerseil aufgebracht werden, insbesondere Abstandselemente und/oder eine Ummantelung.

In einer Ausführungsform wird die Schneidperle wie oben beschrieben auf ein auf dem Trägerseil befestigtes Gewinde aufgeschraubt. Grundsätzlich ist es möglich, die Perle wie beschrieben auf beliebige Art und Weise auf das Trägerseil zu fügen. Bevorzugt wird die Schneidperle aber auf das an dem Trägerseil befestigte Gewinde aufgeschraubt. Das Gewinde kann dabei selbst in beliebiger Weise auf das Trägerseil gefügt, beispielsweise geklebt, geschweißt oder gelötet sein.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Schneidelement die Rede ist, ist dies so zu verstehen, dass genau ein Schneidelement, zwei Schneidelemente oder mehr Schneidelemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt ein Schneidelement einer Schneidperle in einem Längsschnitt entlang einer Vorschubrichtung.
- **Fig. 2**: zeigt ein Schleifelement, Grundelement oder Neutralelement einer Schneidperle in einem Längsschnitt.
- **Fig. 3**: zeigt eine Schneidperle, bei der ein Schneidelement vor einem Schleifelement, Grundelement oder Neutralelement angeordnet ist, in einem Längsschnitt.
- **Fig. 4**: zeigt eine Schneidperle, bei der ein Schneidelement hinter einem Schleifelement, Grundelement oder Neutralelement angeordnet ist, in einem Längsschnitt.
- **Fig. 5**: zeigt eine Schneidperle, bei der ein Schneidelement vor einem Schleifelement, Grundelement oder Neutralelement und ein weiteres Schneidelement hinter dem Schleifelement, Grundelement oder Neutralelement angeordnet ist, in einem Längsschnitt.
- **Fig. 6**: zeigt ein Sägeseil mit einer Schneidperle gemäß Fig. 3 in einem Längsschnitt.
- **Fig. 7**: zeigt ein Sägeseil mit einer Schneidperle gemäß Fig. 4 in einem Längsschnitt.
- **Fig. 8**: zeigt ein Sägeseil mit einer Schneidperle gemäß Fig. 5 in einem Längsschnitt.
- **Fig. 9**: zeigt schematisch ein Verfahren zur Herstellung eines Sägeseils mit einer Schneidperle.

### FIGURENBESCHREIBUNG

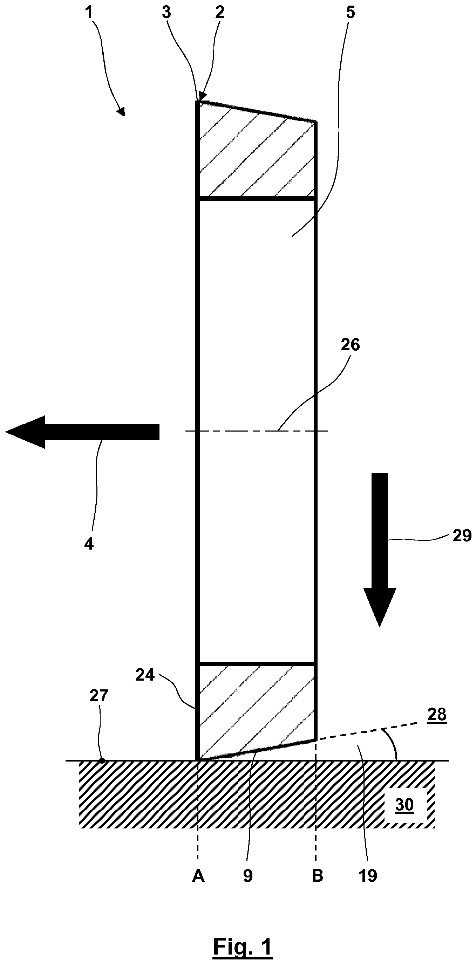

**Fig. 1** zeigt ein Schneidelement 1 für eine Schneidperle 13. An dem Schneidelement 1 ist eine geometrisch bestimmte Schneide 2 ausgebildet. Die geometrisch bestimmte Schneide 2 weist eine Schneidkante 3 auf, für die eine Schneidkantengeometrie gewählt werden kann, die Rundungen (Radien) und/oder Fasen umfasst. Die Schneidkante 3 ist von einer Spanfläche 24 und einer Freifläche 9 gebildet. Die geometrisch bestimmte Schneide 2 weist einen von der Freifläche 9 gegenüber einer Längsachse 26 und einer Innenfläche 27 des Sägekanals 28 gebildeten Freiwinkel 19 auf. Das Schneidelement 1 wird an einem Sägeseil 15 in eine bestimmungsgemäße Bewegungsrichtung 4 bewegt und gleichzeitig in eine Vorschubrichtung 29, welche vertikal zur Bewegungsrichtung 4 orientiert ist, durch ein Werkstück 30 bewegt. Die bestimmungsgemäße Bewegungsrichtung 4 wird häufig als die Schnittrichtung bezeichnet.

Grundsätzlich kann die geometrisch bestimmte Schneide 2 jeden Freiwinkel 19 aufweisen, der zwischen 0 und 90° liegt. Der Freiwinkel 19 kann beispielsweise mehr als 0°, aber weniger als 20° betragen. Er kann insbesondere zwischen 5° und 15°, zwischen 8° und 12° oder zwischen 9° und 11° betragen.

Das Schneidelement 1 verjüngt sich zwischen zwei Axialabschnitten A und B. Dabei liegt der Axialabschnitt A vor dem Axialabschnitt B. Im Axialabschnitt A ist die Schneidkante 3 angeordnet. Damit ist der Axialabschnitt A der Axialabschnitt, der mit dem Werkstück 30 in Wechselwirkung tritt, bevor Axialabschnitt B in dieses eintritt. Das Schneidelement 1 verjüngt sich also entgegen seiner Bewegungsrichtung 4 und weg von der Schneidkante 3. Die Schneidkante 3 greift damit an dem Werkstück 30 an.

Ist die Verjüngung wie in Fig. 1 gezeigt gleichmäßig und konusförmig, so bildet eine gesamte Mantelfläche des Schneidelements 1 die Freifläche 9 aus, die den Freiwinkel 19 definiert. Es ist durchaus möglich, dass die Verjüngung in nicht-kontinuierlicher Weise, beispielsweise als eine wellenförmige oder stufenförmige Kontur, gewählt wird. In diesem Fall ist es möglich, dass das Schneidelement 1 sich verjüngt, während der Freiwinkel 19 0° beträgt.

Das Schneidelement 1 bildet in seiner Mitte eine Ausnehmung 5. Diese ist hier als Durchgangsausnehmung 12 gezeigt. Folglich ist das in Fig. 1 gezeigte Schneidelement 1 in etwa ringförmig ausgebildet. Die Ringform ist dabei gebildet als eine Kegelstumpfform, wobei im Bereich des Axialabschnitts A eine Grundfläche und im Axialabschnitt B eine Deckfläche des Kegelstumpfes gebildet ist. Das Schneidelement 1 kann aber auch andere Geometrien einnehmen.

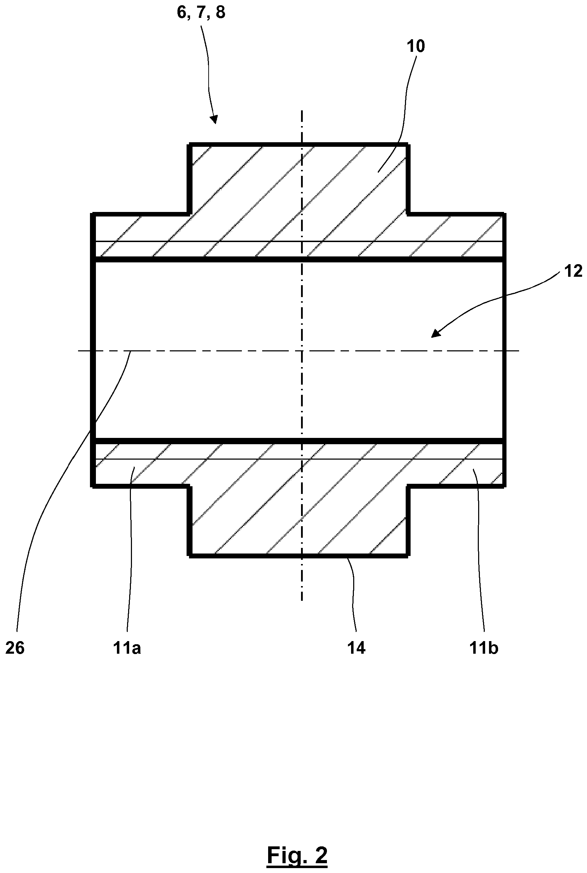

Das in **Fig. 2** dargestellte Element kann sowohl ein Schleifelement 6 als auch ein Grundelement 7 und/oder Neutralelement 8 sein. Alle in den **Fig. 2 bis 8** gezeigten Ausführungsformen können sowohl mit einem Schleifelement 6 als auch mit einem Grund- und/oder Neutralelement 7, 8 verwirklicht werden. Dabei weist das Schleifelement 6 im Bereich seiner beispielsweise zylindrischen Mantelfläche eine geometrisch unbestimmte Schneide 14 auf. Das Neutralelement 8 weist keine geometrisch unbestimmte Schneide auf und nimmt selbst nicht an einem Materialabtrag teil. Das Neutralelement 8 weist daher auch keine geometrisch bestimmte Schneide auf. Es ist aber möglich, dass ein Grundelement 7 keine geometrisch bestimmte Schneide, aber eine geometrisch unbestimmte Schneide 14 oder keine geometrisch unbestimmte Schneide, aber eine geometrisch bestimmte Schneide 2 aufweist und somit an dem Materialabtrag teilnimmt. Im Folgenden wird das in Fig. 2 dargestellte Element als ein Grundelement 7 bezeichnet, ohne dass die Erfindung dadurch beschränkt sein soll. Das Grundelement 7 kann jeweils auch ein Schleifelement 6 oder ein Neutralelement 8 ausbilden.

Das Grundelement 7 gemäß Fig. 2 weist einen Zentralbereich 10 auf, in dem das Grundelement 7 eine zylindrische Mantelfläche aufweist. An den Zentralbereich 10 schließen sich in einer axialen Richtung des Grundelements 7 zwei hülsenartige Sockelbereiche 11a, 11b an. Im Bereich der Sockelbereiche 11a, 11b verfügt das Grundelement 7 ebenfalls über zylindrische Mantelflächen. Im Bereich der Sockelbereiche 11 weist das Grundelement 7 einen geringeren Außendurchmesser auf als im Zentralbereich 10, während die Innendurchmesser der Sockelbereiche 11a, 11b und des Zentralbereichs 10 gleich sind, womit eine zylindrische Ausnehmung 12 gebildet ist. Grundsätzlich kann das Grundelement 7 beliebige geeignete Geometrien haben, insbesondere geeignete Abwandlungen einer Zylinderform, beispielsweise mit einheitlichen oder variierenden Durchmessern. Die Ausbildung eines Sockelbereichs 11 ist jedoch besonders vorteilhaft zum Fügen des Schneidelements 1 auf das Grundelement 7.

Vorteilhafterweise wird ein Außendurchmesser des Sockelbereichs 11 so gewählt, dass er mit einem Innendurchmesser der Ausnehmung 5 in dem Schneidelement 1 eine Spiel-, Übergangs- oder Presspassung bildet. Es ist auch möglich, dass der Sockelbereich 11 ein Außengewinde aufweist, das in ein Innengewinde in der Ausnehmung 5 des Schneidelements 1 eingreifen kann.

Die Durchgangsausnehmung 12 kann in der in Fig. 2 gezeigten Weise ohne eine Struktur geschaffen sein. Es ist jedoch auch möglich, dass die Durchgangsausnehmung 12 ein Innengewinde aufweist. Ein solches Innengewinde kann der ISO-Definition für metrische Gewinde gemäß zwischen M3 und M8 liegen, insbesondere kann es ein M6-Gewinde sein.

Ist das Grundelement 7 mit einer geometrisch unbestimmten Schneide 14 und/oder als Schleifelement 6 ausgebildet, kann die Schneide mit Diamant gebildet sein. Dabei kann jeder geeignete Diamant gewählt werden, beispielsweise MKD oder PKD.

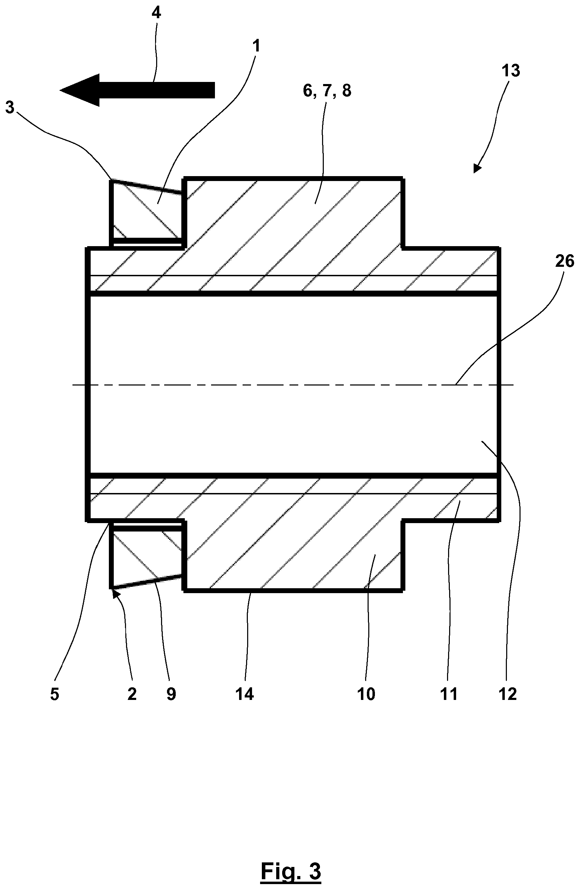

**Fig. 3** zeigt eine Schneidperle 13. Das Schneidelement 1 ist dabei mit seiner Ausnehmung 5 auf das Grundelement 7 aufgeschoben. Wenn an dem Sockelbereich 11 und dem Schneidelement 1 jeweils ein Gewinde vorhanden ist, kann das Schneidelement 1 auf den Sockelbereich 11 aufgeschraubt sein. Das Schneidelement 1 kann aber auch in jeder anderen Weise auf den Sockelbereich 11 gefügt, beispielsweise geklebt, geschweißt oder gelötet sein oder mit einer Presspassung gehalten sein. Grundelement 7 und Schneidelement 1 bilden zusammen die Schneidperle 13 aus.

Der Pfeil in Fig. 3 verdeutlicht eine Bewegungsrichtung 4 der Schneidperle 13 (und eines Sägeseils 15) bei einem bestimmungsgemäßen Gebrauch, d. h. bei einem Gebrauch zum Sägen. Das Schneidelement 1 ist vor dem Grundelement 7 angeordnet. Dabei kann das Schneidelement 1 zusammen mit einem Schleifelement 6 die schneidende Wirkung übernehmen, wobei das Schneidelement 1 an dem Werkstück 30 angreift, bevor das Schleifelement 6 an dem Werkstück 30 angreift.

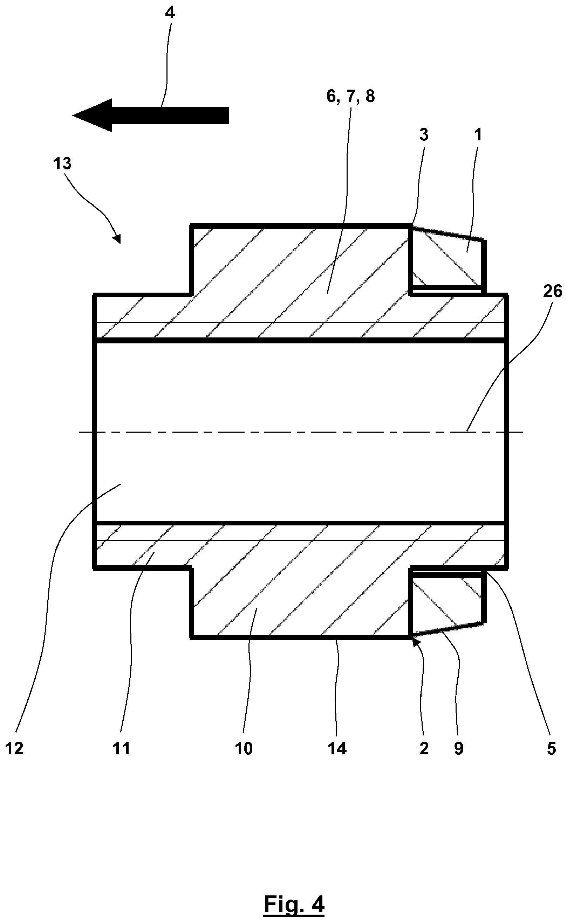

**Fig. 4** zeigt eine Schneidperle 13, bei der im Gegensatz zu der Schneidperle 13 aus Fig. 3 das Schneidelement 1 hinter dem Grundelement 7 angeordnet ist. Die Schneidkante 3 des Schneidelements 1 ist auf der dem Zentralbereich 10 zugewandten Seite des Grundelements 7 angeordnet. Wenn das Grundelement 7 als Schleifelement 6 ausgebildet ist, dann greift zunächst das Schleifelement 6 mit der geometrisch unbestimmten Schneide 14 an dem Werkstück 30 an, bevor das Schneidelement 1 mit der geometrisch bestimmten Schneide 2 an dem Werkstück 30 eingreift (unter der Voraussetzung, dass der Durchmesser des Schneidelements 1 zumindest geringfügig größer ist als der Durchmesser des Schleifelements 6).

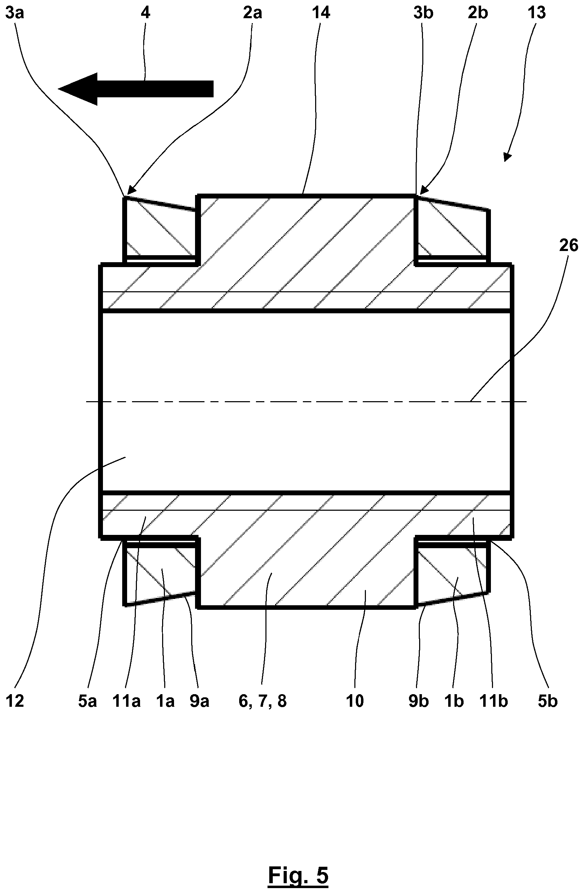

**Fig. 5** zeigt eine Schneidperle 13, die zwei Schneidelemente 1a, 1b aufweist. Dabei ist ein Schneidelement 1a vor dem Grundelement 7 und das andere Schneidelement 1b hinter dem Grundelement 7 angeordnet. Greift die Schneidperle 13 an dem Werkstück 30 (nicht dargestellt) an, wirkt zunächst die geometrisch bestimmte Schneide 2a des Schneidelements 1a an dem Werkstück 30. Anschließend wirkt die geometrisch unbestimmte Schneide 14 an dem Werkstück 30, wenn das Grundelement 7 als ein Schleifelement 6 ausgebildet ist. Danach kommt die zweite geometrisch bestimmte Schneide 2b des zweiten Schneidelements 1b zur Wirkung (vorausgesetzt, die Durchmesser der Elemente 1a, 7 und 1b sind zumindest geringfügig ansteigend). Für eine nicht erfindungsgemäße Ausführungsform kann das Grundelement 7 aber auch als Neutralelement 8 ausgebildet sein. In diesem Fall wirken lediglich die beiden geometrisch bestimmten Schneiden 2a und 2b auf das Werkstück 30 ein, während das Neutralelement 8 die beiden Schneidelemente 1a und 1b und damit die geometrisch bestimmten Schneiden 2a und 2b in einem definierten Abstand hält.

Eine Schneidperle 13 gemäß Fig. 5 mit zwei Schneidelementen kann eine größere Länge aufweisen als eine Schneidperle gemäß Fig. 3 oder Fig. 4 mit nur einem Schneidelement 1. Eine Länge kann zwischen 11 und 12 mm betragen.

In den gezeigten Ausführungsformen gemäß den Fig. 3, 4 und 5 sind jeweils die Außendurchmesser des Schneidelements 1 (ein Maximal-Außendurchmesser der Schneidkante 3 gemessen im Axialabschnitt A) und des Schleifelements 6 etwa gleich. Eine solche Ausführungsform ist einsetzbar unabhängig davon, ob das Grundelement 7 eine geometrisch unbestimmte Schneide 14 aufweist oder nicht. Weist das Grundelement 7 eine geometrisch unbestimmte Schneide 14 auf, glättet sie das Werkstück nach oder vor einem Materialabtrag durch die geometrisch bestimmte Schneide 2. Es ist aber auch möglich, dass die Außendurchmesser voneinander abweichen. Dabei kann der Außendurchmesser des Schneidelements 1 kleiner sein als der des Grundelements 7. Dabei kann ein Unterschied der Durchmesser weniger als 1,0 mm oder 0,5 mm, insbesondere 0,1 bis 0,3 mm, betragen. Der Außendurchmesser des Schneidelements 1 kann aber auch größer sein als der Außendurchmesser des Grundelements 7.

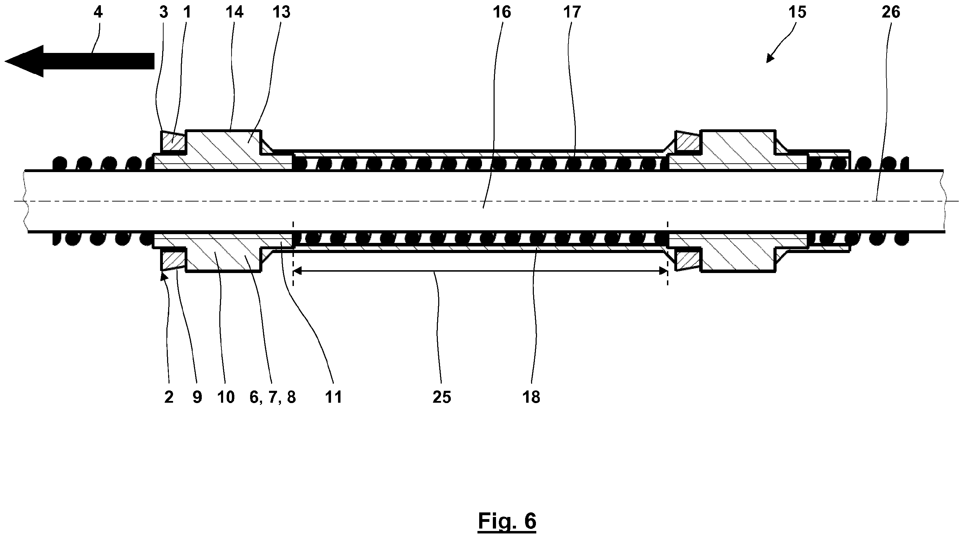

**Fig. 6** zeigt ein Sägeseil 15. Das Sägeseil 15 ist mit einem Trägerseil 16 gebildet. Auf dem Trägerseil 16 sind in regelmäßigen Abständen Schneidperlen 13 angeordnet. Die Schneidperlen 13 können aber durchaus auch in unregelmäßigen Abständen angeordnet sein. Fig. 6 zeigt nur einen Ausschnitt aus dem Sägeseil 15.

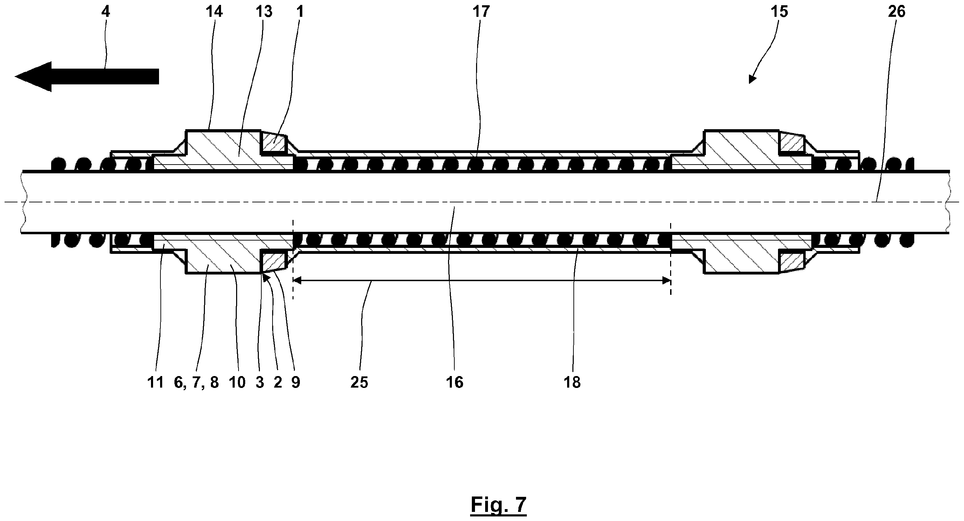

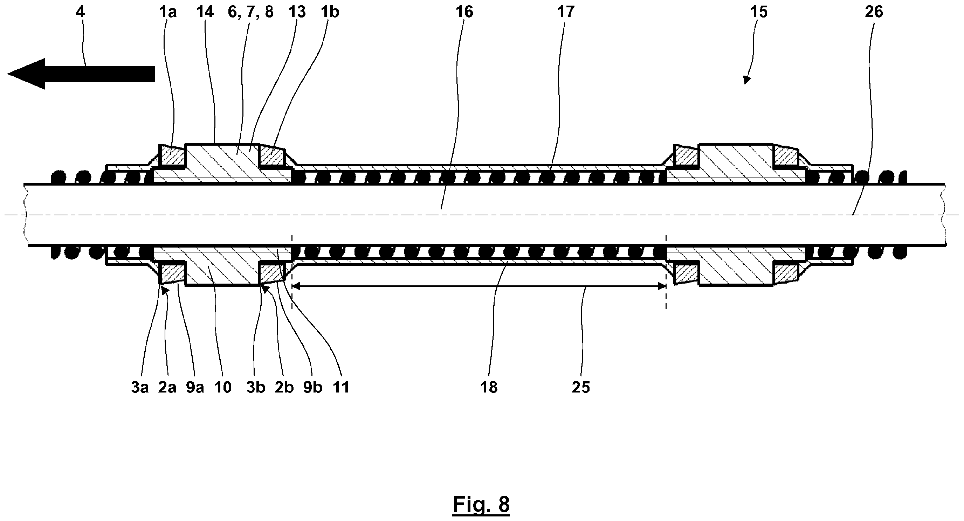

Fig. 6 zeigt ein Sägeseil 15 mit einer Schneidperle 13 gemäß Fig. 3, bei der das Schneidelement 1 vor dem Grundelement 7 angeordnet ist. Die **Fig. 7** **und** **8** zeigen Sägeseile 15 mit Schneidperlen 13 gemäß Fig. 4 (Fig. 7) bzw. Fig. 5 (Fig. 8).

Es ist auch vorstellbar, dass ein Sägeseil 15 verschiedene Schneidperlen 13 aufweist. Dabei kann beispielsweise ein Teil der Schneidperlen 13 einstückig ausgebildet sein, während ein anderer Teil der Schneidperlen 13 ein Schneidelement 1 und ein Schleifelement 6 aufweist. Es kann auch ein Teil der Schneidperlen 13 das Schneidelement 1 entgegen der Bewegungsrichtung 4 vor dem Schleifelement 6 (Fig. 3) und ein Teil der Schneidperlen 13 hinter dem Schleifelement 6 (Fig. 4) aufweisen. Möglich ist alternativ oder kumulativ auch, dass Schneidperlen 13 mit unterschiedlichen Außendurchmessern oder Konturen verwendet werden. Erfindungsgemäße Schneidperlen 13 können auch mit aus dem Stand der Technik bekannten Schneidperlen kombiniert werden, die nur eine geometrisch unbestimmte Schneide aufweisen. Jede andere mögliche Kombination von Schneidperlen 13 untereinander oder mit bekannten Schneidperlen ist ebenfalls möglich.

Zwischen den Schneidperlen 13 ist um das Trägerseil 16 ein Abstandselement 17 angeordnet. Das Abstandselement 17 ist als eine Feder ausgebildet. Das Abstandselement 17 kann aber auch jede andere geeignete Form annehmen. Beispielsweise kann das Abstandselement 17 außer einer Feder, beispielsweise einer Stahlfeder, auch ein hülsenförmiges Kunststoffelement sein, das um das Trägerseil 16 angeordnet ist. Das Kunststoffelement kann dabei elastisch sein. Mehrere Abstandselemente 17 können, wie in den Fig. 6, 7 und 8 gezeigt, von gleicher Länge sein und somit gleichmäßige Abstände 25 zwischen den Schneidperlen 13 definieren. Es ist aber durchaus möglich, dass mehrere Abstandselemente 17 ungleiche Längen aufweisen und damit unregelmäßige Abstände 25 zwischen den Schneidperlen 13 definieren.

Das Abstandselement 17 ist von einer Ummantelung 18 ummantelt. Die Ummantelung 18 kann elastisch sein und beispielsweise aus Kunststoff ausgebildet sein. Die Ummantelung 18 ummantelt das Abstandselement 17 so, dass es vor Staub und Schmutz geschützt ist. So können insbesondere Abfallpartikel nicht in das Abstandselement 17 eindringen. Die Ummantelung 18 ist auch so ausgebildet, dass sie an die Schneidperle 13 heranreicht oder mit dieser teilweise überlappt. In den Fig. 6, 7 und 8 ist gezeigt, dass die Ummantelung 18 dort, wo der Sockelbereich 11 der Schneidperle 13 freiliegt, den Sockelbereich 11 überlappt, an dem Zentralbereich 10 der Schneidperle 13 anliegt und eine konische Mantelfläche aufweist. Auf der anderen Seite der Schneidperle 13 ist ein Endbereich der Ummantelung 18 mit einer konischen Mantelfläche ausgebildet. Dieser Endbereich bedeckt einen Teil des Sockelbereichs 11 und liegt an dem Schneidelement 1 an. In dieser Weise sind die einzigen Teile der Schneidperle 13, die frei liegen und nicht durch die Ummantelung 18 geschützt sind, die geometrisch bestimmte Schneide 2 und, wenn das Grundelement 7 als Schleifelement 6 ausgebildet ist, die geometrisch unbestimmte Schneide 14. Alle anderen Teile der Schneidperle 13 und des übrigen Sägeseils 15, die nicht mit dem Werkstück 30 in Kontakt treten, sind von der Ummantelung 18 bedeckt und so vor Abfallpartikeln und Verschleiß geschützt.

Wenn die Schneidperle 13 ein Gewinde aufweist, kann sie in nicht gezeigter Weise auf das Trägerseil 16 aufgeschraubt sein. Sie kann jedoch auch auf jede andere Weise auf das Trägerseil 16 gefügt, beispielsweise geklebt, geschweißt oder gelötet sein.

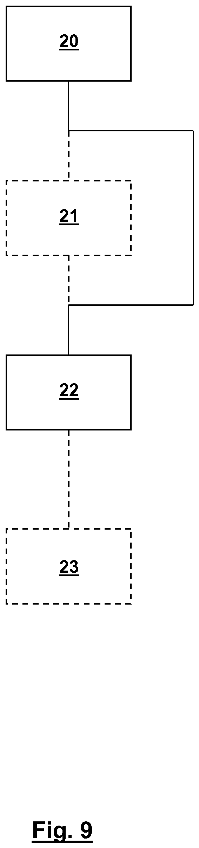

Mit dem in **Fig. 9** illustrierten Verfahren kann ein Sägeseil 15 hergestellt werden. In einem Schritt 20 werden ein Schneidelement 1 mit einer geometrisch bestimmten Schneide 2 und ein Schleifelement 6 mit einer geometrisch unbestimmten Schneide 14 oder ein Neutralelement 8 zusammengefügt. Dabei kann jedes bekannte und geeignete Fügeverfahren gewählt werden.

Bereits in Schritt 20 kann eine Schneidperle 13 gemäß Anspruch 1 gebildet sein. Es ist aber auch möglich, dass in einem optionalen Schritt 21 weitere Elemente an das Schneidelement 1 und das Schleifelement 6 angefügt werden, sodass eine erfindungsgemäße Schneidperle 13 gemäß Anspruch 1 gebildet wird. Dabei können beispielsweise weitere Schneidelemente 1, (weitere) Schleifelemente 6 oder (weitere) Neutralelemente 8 oder beliebige andere Elemente angefügt werden.

In einem Schritt 22 wird die Schneidperle 13 auf ein Trägerseil 16 gefügt. Dabei kann jedes der oben genannten Fügeverfahren gewählt werden, beispielsweise Kleben, Löten oder Schweißen. Insbesondere kann an der Schneidperle 13 jedoch ein Gewinde ausgebildet sein, mit dem die Schneidperle 13 auf ein auf dem Trägerseil 16 gebildetes Gegengewinde aufgeschraubt wird. Das Gegengewinde kann auf das Trägerseil 16 ebenfalls in jeder beliebigen Weise gefügt werden. Es ist möglich, dass bereits in Schritt 22 ein erfindungsgemäßes Sägeseil 15 ausgebildet wird.

Es ist aber auch möglich, dass in einem Schritt 23 weitere Elemente auf das Trägerseil 16 gefügt werden. Beispielsweise kann ein Abstandselement 17 und/oder eine Ummantelung 18 wie oben beschrieben auf das Trägerseil 16 gefügt werden. Sind mehrere Schneidperlen 13 auf dem Trägerseil 16 angeordnet, so können die Abstandselemente 17 so zwischen den Schneidperlen 13 angeordnet werden, dass sie einen Abstand 25 der Schneidperlen 13 definieren. Der Abstand 25 der Schneidperlen 13 kann gleichmäßig gewählt sein. Die Abstandselemente 17 können aber auch verschiedene Längserstreckungen aufweisen und so unterschiedliche Abstände 25 definieren. Die Ummantelung 18 kann so aufgebracht werden, dass sie nur das Abstandselement 17 ummantelt. Vorzugsweise wird die Ummantelung 18 aber so aufgebracht, dass auch ein Teil der Schneidperle 13 von der Ummantelung 18 ummantelt wird.

### BEZUGSZEICHENLISTE

- A: Axialabschnitt
- B: Axialabschnitt
- 1: Schneidelement
- 2: Geometrisch bestimmte Schneide
- 3: Schneidkante
- 4: Bewegungsrichtung
- 5: Ausnehmung
- 6: Schleifelement
- 7: Grundelement
- 8: Neutralelement
- 9: Freifläche
- 10: Zentralbereich
- 11: Sockelbereich
- 12: Ausnehmung
- 13: Schneidperle
- 14: Geometrisch unbestimmte Schneide
- 15: Sägeseil
- 16: Trägerseil
- 17: Abstandselement
- 18: Ummantelung
- 19: Freiwinkel
- 20: Schritt
- 21: Schritt
- 22: Schritt
- 23: Schritt
- 24: Spanfläche
- 25: Abstand
- 26: Längsachse
- 27: Innenfläche
- 28: Sägekanal
- 29: Vorschubrichtung
- 30: Werkstück

## Patentansprüche

1. Schneidperle (13) für ein Sägeseil (15) mit einer geometrisch bestimmten Schneide (2), wobei
- sich die Schneidperle (13) von der geometrisch bestimmten Schneide (2) entgegen einer bestimmungsgemäßen Bewegungsrichtung (4) der Schneidperle (13) verjüngt,
**dadurch gekennzeichnet, dass**
- die Schneidperle (13) eine geometrisch unbestimmte Schneide (14) aufweist.

2. Schneidperle (13) nach Anspruch 1, **dadurch gekennzeichnet, dass** die geometrisch bestimmte Schneide (2) einen Freiwinkel (19) größer als 0° aufweist, wobei der Freiwinkel (19) insbesondere zwischen 9° und 11° beträgt.

3. Schneidperle (13) nach einem der vorherigen Ansprüche, **dadurch gekennzeichnet, dass** die geometrisch bestimmte Schneide (2) eine Schneidkantenarchitektur aufweist und/oder dass die geometrisch bestimmte Schneide (2) mit einem hochharten Schneidstoff gebildet ist, insbesondere dass die geometrisch bestimmte Schneide (2) mit Diamant gebildet ist.

4. Schneidperle (13) nach einem der vorherigen Ansprüche, **dadurch gekennzeichnet, dass** die geometrisch unbestimmte Schneide (14) mit Diamant gebildet ist.

5. Schneidperle (13) nach einem der vorherigen Ansprüche, **dadurch gekennzeichnet, dass** die Schneidperle (13) ein Grund- und/oder Neutralelement (7, 8) aufweist,
- an dem die geometrisch bestimmte Schneide (2) und/oder die oder eine geometrisch unbestimmte Schneide (14) gehalten oder ausgebildet sind/ist,
- das einen Abstand zwischen einer geometrisch bestimmten Schneide (2) und einer geometrisch unbestimmten Schneide (14) oder zwischen zwei geometrisch bestimmten Schneiden (2) definiert und/oder
- das an einem Materialabtrag nicht beteiligt ist.

6. Schneidperle (13) nach einem der vorherigen Ansprüche, **dadurch gekennzeichnet, dass** die geometrisch bestimmte Schneide (2) vor der geometrisch unbestimmten Schneide (14) oder dem Grund- und/oder Neutralelement (7, 8) angeordnet ist.

7. Schneidperle (13) nach einem der vorherigen Ansprüche, **dadurch gekennzeichnet, dass** die oder eine geometrisch bestimmte Schneide (2) hinter der geometrisch unbestimmten Schneide (14) oder dem Grund- und/oder Neutralelement (7, 8) angeordnet ist.

8. Schneidperle (13) nach einem der vorherigen Ansprüche, **dadurch gekennzeichnet, dass**
- die Schneidperle (13) ein Schneidelement (1) und ein Schleifelement (6) aufweist, welche separat voneinander ausgebildet sind,
- das Schneidelement (1) die oder eine geometrisch bestimmte Schneide (2) aufweist und
- das Schleifelement (6) die oder eine geometrisch unbestimmte Schneide (14) aufweist.

9. Schneidperle (13) nach Anspruch 8, **dadurch gekennzeichnet, dass** ein Außendurchmesser der geometrisch bestimmten Schneide des Schneidelements (1) kleiner ist als ein Außendurchmesser des Schleifelements (6) oder des Grund- und/oder Neutralelements (7, 8), insbesondere dass der Außendurchmesser der geometrisch bestimmten Schneide (2) des Schneidelements (1) mehr als 0 mm und maximal 2 mm geringer ist als der Außendurchmesser des Schleifelements (6) oder des Grund- und/oder Neutralelements (7, 8).

10. Schneidperle (13) nach einem der Ansprüche 8 bis 9, **dadurch gekennzeichnet, dass**
- das Schneidelement (1) eine Ausnehmung (5) aufweist und
- das Schneidelement (1) mit der Ausnehmung (5) auf einen Sockelbereich (11) des Schleifelements (6) oder Grund- und/oder Neutralelements (7, 8) gefügt ist.

11. Sägeseil (15), **dadurch gekennzeichnet, dass** das Sägeseil (15) eine Schneidperle (13) nach einem der vorhergehenden Ansprüche aufweist.

12. Sägeseil (15) nach Anspruch 11, **dadurch gekennzeichnet, dass** das Sägeseil (15)
- ein Trägerseil (16),
- zwei Schneidperlen (13) und
- ein auf dem Trägerseil (16) angeordnetes Abstandselement (17), das einen Abstand (25) der beiden Schneidperlen (13) definiert,
aufweist.

13. Sägeseil (15) nach Anspruch 12, **dadurch gekennzeichnet, dass** das Sägeseil (15) eine Ummantelung (18), die das Abstandselement (17) und einen Teilbereich der Schneidperle (13) radial ummantelt, aufweist.

14. Verfahren zur Herstellung eines Sägeseils (15), insbesondere eines Sägeseils (15) nach einem der Ansprüche 11 bis 13,
**dadurch gekennzeichnet, dass**
- ein Schneidelement (1) mit einer geometrisch bestimmten Schneide (2) und ein Schleifelement (6) mit einer geometrisch unbestimmten Schneide (14) oder ein Schneidelement (1) mit einer geometrisch bestimmten Schneide (2) und ein Neutralelement (8) sowie ein Schleifelement (6) mit einer geometrisch unbestimmten Schneide (14) zusammengefügt werden,
- mit dem Schneidelement (1) und dem Schleifelement (6) oder mit dem Schneidelement (1) und dem Neutralelement (8) sowie dem Schleifelement (6) eine Schneidperle (13) nach einem der Ansprüche 1 bis 10 gebildet wird und
- die Schneidperle (13) auf das Trägerseil (16) gefügt wird.

15. Sägeseil (15) nach einem der Ansprüche 11 bis 13 oder Verfahren nach Anspruch 14, **dadurch gekennzeichnet, dass** die Schneidperle (13) auf ein auf dem Trägerseil (16) befestigtes Gewinde aufgeschraubt ist oder wird.

## Claims

1. Cutting bead (13) for a saw rope (15) having a geometrically defined cutting portion (2),
- the cutting bead (13) tapering from the geometrically defined cutting portion (2) in a direction opposite to a designated moving direction (4) of the cutting bead (13),
**characterised in that**
- the cutting bead (13) comprising a geometrically undefined cutting portion (14).

2. Cutting bead (13) of claim 1, **characterised in that** the geometrically defined cutting portion (2) comprises a clearance angle (19) being larger than 0°, the clearance angle (19) in particular being between 9° and 11°.

3. Cutting bead (13) of one of the preceding claims, **characterised in that** the geometrically defined cutting portion (2) comprises a cutting portion architecture and/or the geometrically defined cutting portion (2) comprises a super-hard cutting material, the geometrically defined cutting portion (2) in particular comprising a diamond material.

4. Cutting bead (13) of one of the preceding claims, **characterised in that** the geometrically undefined cutting portion (14) comprises a diamond material.

5. Cutting bead (13) of one of the preceding claims, **characterised in that** the cutting bead (13) comprises a base element and/or neutral element (7, 8),
- on which the geometrically defined cutting portion (2) and/or the or a geometrically undefined cutting portion (14) is held or by which the same is formed,
- which defines a distance between a geometrically defined cutting portion (2) and a geometrically undefined cutting portion (14) or between two geometrically defined cutting portions (2) and/or
- which does not contribute to the removal of material.

6. Cutting bead (13) of one of the preceding claims, **characterised in that** the geometrically defined cutting portion (2) is arranged in front of the geometrically undefined cutting portion (14) or in front of the base element and/or neutral element (7, 8).

7. Cutting bead (13) of one of the preceding claims, **characterised in that** the or a geometrically defined cutting portion (2) is arranged behind the geometrically undefined cutting portion (14) or behind the base element and/or neutral element (7, 8).

8. Cutting bead (13) of one of the preceding claims, **characterised in that**
- the cutting bead (13) comprises a cutting element (1) and an abrasive element (6) which are formed separately from each other,
- the cutting element (1) comprises the or a geometrically defined cutting portion (2) and
- the abrasive element (6) comprises the or a geometrically defined cutting portion (14).

9. Cutting bead (13) of claim 8, **characterised in that** an outer diameter of the geometrically defined cutting portion of the cutting element (1) is smaller than an outer diameter of the abrasive element (6) or of the base element and/or neutral element (7, 8), the outer diameter of the geometrically defined cutting portion (2) of the cutting element (1) in particular being more than 0 mm and with a maximum of 2 mm smaller than the outer diameter of the abrasive element (6) or of the base element and/or neutral element (7, 8).

10. Cutting bead (13) of one of claims 8 to 9, **characterised in that**
- the cutting element (1) comprises a recess (5) and
- the recess (5) of the cutting element (1) is jointed or fitted with or to a base portion (11) of the abrasive element (6) or of the base element and/or neutral element (7, 8).

11. Saw rope (15), **characterised in that** the saw rope (15) comprises a cutting bead (13) of one of the preceding claims.

12. Saw rope (15) of claim 11, **characterised in that** the saw rope (15) comprises
- a support rope (16),
- two cutting beads (13) and
- a distance element (17) arranged on the support rope (16), the distance element (17) defining a distance (25) of the two cutting beads (13).

13. Saw rope (15) of claim 12, **characterised in that** the saw rope (15) comprises a sheathing (18) which radially sheaths the distance element (17) and a sub-portion of the cutting bead (13).

14. Method for manufacturing a saw rope (15), in particular a saw rope (15) of one of claims 11 to 13,
**characterised in that**
- a cutting element (1) comprising a geometrically defined cutting portion (2) and an abrasive element (6) comprising a geometrically undefined cutting portion (14) or a cutting element (1) comprising a geometrically defined cutting portion (2) and a neutral element (8) as well as an abrasive element (6) comprising a geometrically undefined cutting portion (14) are jointed or fitted with each other,
- a cutting bead (13) of one of claims 1 to 10 comprises the cutting element (1) and the abrasive element (6) or the cutting element (1) and the neutral element (8) as well as the abrasive element (6) and
- the cutting bead (13) is fitted or jointed with or to the saw rope (16).

15. Saw rope (15) of one of claims 11 to 13 or method of claim 14, **characterised in that** the cutting bead (13) is screwed to a thread which is fixed on the support rope (16).

## Revendications

1. Perle de coupe (13) pour un câble de sciage (15) avec un tranchant défini géométriquement (2), dans laquelle
- la perle de coupe (13) se rétrécit du tranchant défini géométriquement (2) à l'encontre d'une direction de mouvement (4), conforme à l'usage prévu, de la perle de coupe (13),
**caractérisée en ce que**
- la perle de coupe (13) présente un tranchant non défini géométriquement (14).

2. Perle de coupe (13) selon la revendication 1, **caractérisée en ce que** le tranchant défini géométriquement (2) présente un angle libre (19) supérieur à 0°, dans laquelle l'angle libre (19) est plus particulièrement entre 9° et 11°.

3. Perle de coupe (13) selon l'une des revendications précédentes, **caractérisée en ce que** le tranchant défini géométriquement (2) présente une architecture d'arête de coupe et/ou **en ce que** le tranchant défini géométriquement (2) est constitué d'une matière de coupe à haute dureté, plus particulièrement **en ce que** le tranchant défini géométriquement (2) est constitué de diamant.

4. Perle de coupe (13) selon l'une des revendications précédentes, **caractérisée en ce que** le tranchant non défini géométriquement (14) est constitué de diamant.

5. Perle de coupe (13) selon l'une des revendications précédentes, **caractérisée en ce que** la perle de coupe (13) comprend un élément de bas et/ou neutre (7, 8)
- au niveau duquel le tranchant défini géométriquement (2) et/ou le ou un tranchant non défini géométriquement (14) sont/est maintenu ou réalisé,
- qui définit une distance entre un tranchant défini géométriquement (2) et un tranchant non défini géométriquement (14) ou entre deux tranchants définis géométriquement (2) et/ou
- qui ne participe pas à un enlèvement de matériau.

6. Perle de coupe (13) selon l'une des revendications précédentes, **caractérisée en ce que** le tranchant défini géométriquement (2) est disposé devant le tranchant non défini géométriquement (14) ou l'élément de bas et/ou neutre (7, 8).

7. Perle de coupe (13) selon l'une des revendications précédentes, **caractérisée en ce que** le ou un tranchant défini géométriquement (2) est disposé derrière le tranchant non défini géométriquement (14) ou l'élément de bas et/ou neutre (7, 8).

8. Perle de coupe (13) selon l'une des revendications précédentes, **caractérisée en ce que**
- la perle de coupe (13) comprend un élément de coupe (1) et un élément de meulage (6) qui sont réalisés séparément,
- l'élément de coupe (1) présente le ou un tranchant défini géométriquement (2) et
- l'élément de meulage (6) présente le ou un tranchant non défini géométriquement (14).

9. Perle de coupe (13) selon la revendication 8, **caractérisée en ce qu'**un diamètre extérieur du tranchant défini géométriquement de l'élément de coupe (1) est inférieur à un diamètre extérieur de l'élément de meulage (6) ou de l'élément de base et/ou neutre (7, 8), plus particulièrement **en ce que** le diamètre extérieur du tranchant défini géométriquement (2) de l'élément de coupe (1) est inférieur de plus de 0 mm et de 2 mm maximum au diamètre extérieur de l'élément de meulage (6) ou de l'élément de base et/ou neutre (7, 8).

10. Perle de coupe (13) selon l'une des revendications 8 à 9, **caractérisée en ce que**
- l'élément de coupe (1) comprend un évidement (5) et
- l'élément de coupe (1) avec l'évidement (5) est disposé sur une partie de socle (11) de l'élément de meulage (6) ou de l'élément de base et/ou neutre (7, 8).

11. Câble de sciage (15) **caractérisé en ce que** le câble de sciage (15) comprend une perle de coupe (13) selon l'une des revendications précédentes.

12. Câble de sciage (15) selon la revendication 11, **caractérisé en ce que** le câble de sciage (15) comprend
- un câble porteur (16),
- deux perles de coupe (13) et
- un élément d'écartement (17) disposé sur le câble porteur (16), qui définit une distance (25) entre les deux perles de coupe (13).

13. Câble de sciage (15) selon la revendication 12, **caractérisé en ce que** le câble de sciage (15) comprend une enveloppe (18), qui entoure l'élément d'écartement (17) et une partie de la perle de coupe (13) de manière radiale.

14. Procédé de fabrication d'un câble de sciage (15), plus particulièrement d'un câble sciage (15) selon l'une des revendications 11 à 13,
**caractérisé en ce que**
- un élément de coupe (1) avec un tranchant défini géométriquement (2) et un élément de meulage (6) avec un tranchant non défini géométriquement (14) ou un élément de coupe (1) avec un tranchant défini géométriquement (2) et un élément neutre (8) ainsi qu'un élément de meulage (6) avec un tranchant non défini géométriquement (14) est assemblé,
- avec l'élément de coupe (1) et l'élément de meulage (6) ou avec l'élément de coupe (1) et l'élément neutre (8) ainsi que l'élément de meulage (6), est formée une perle de coupe (13) selon l'une des revendications 1 à 10 et
- la perle de coupe (13) est disposée sur le câble porteur (16).

15. Câble de sciage (15) selon l'une des revendications 11 à 13 ou procédé selon la revendication 14, **caractérisé en ce que** la perle de coupe (13) est vissée ur un filetage fixé sur le câble porteur (16).
